# EUROPEAN PATENT APPLICATION

(11) **EP 4 661 455 A1**
(43) Date of publication of application: **10.12.2025**
(21) Application number: 24787881.2
(22) Date of filing: 20.03.2024
(51) Int. Cl.: H04W 8/24

(54) **POWER TOOL SYSTEM, FIRMWARE UPGRADE METHOD, CHARGING SYSTEM, AND EXTERNAL DEVICE**

(30) Priority: 13.04.2023 CN 202310399291
(71) Applicant: Nanjing Chervon Industry Co., Ltd., Nanjing, Jiangsu 211106 (CN)
(72) Inventor: ZHU, Guanlin, Nanjing, Jiangsu 211106 (CN); LIU, Di, Nanjing, Jiangsu 211106 (CN)
(74) Representative: Sun, Yiming
(86) International application number: PCT/CN2024/082673
(87) International publication number: WO 2024/212775

(57) **Abstract**

Provided are a power tool system, a fixed upgrade method, a charging system, and an external device. The system includes a first device and a second device, where the first device is different from the second device, and the first device is configured to download, from a remote device through a first communication module, an upgrade package applicable to the second device, store the upgrade package into a memory, and transmit the upgrade package to the second device through a second communication module.

## Description

This application claims priority to Chinese Patent Application No. 202310399291.5 filed with the China National Intellectual Property Administration (CNIPA) on Apr. 13, 2023, the disclosure of which is incorporated herein by reference in its entirety.

### TECHNICAL FIELD

The present application relates to the field of communication technology, for example, a power tool system, a fixed upgrade method, a charging system, and an external device.

### BACKGROUND

In the existing art, a wireless communication method includes a network host server and at least two portable tools, where the network host server is communicatively connected to and performs data transmission with the portable tools.

However, for each portable tool, an operator has to log into the portable tool separately, and a communication connection between each portable tool and the network host server can be established only after a separate login. Moreover, the portable tools have to be identical and located in the same subnet to achieve wireless communication, which greatly limits the convenience and universality of wireless communication.

This part provides background information related to the present application, and the background information is not necessarily the existing art.

### SUMMARY

An object of the present application is to solve or at least alleviate part or all of the preceding problems. Therefore, an object of the present application is to provide a power tool system, a fixed upgrade method, a charging system, and an external device, which have greater convenience and higher universality.

To achieve the preceding object, the present application adopts the technical solutions below.

A power tool system includes a first device and a second device, where the first device is different from the second device. The first device includes a first communication module configured to communicate with a remote device; a second communication module configured to communicate with the second device; and a memory configured to store data. The second device includes a third communication module configured to communicate with the first device. The first device is configured to download, from the remote device through the first communication module, an upgrade package applicable to the second device, store the upgrade package into the memory, and transmit the upgrade package to the second device through the second communication module.

In an example, the first communication module and the second communication module support different communication protocols.

In an example, the system performs a firmware upgrade through Bluetooth networking or via a data transmission (DT) link.

In an example, the first communication module includes at least one of radio, Bluetooth, or a cellular network.

In an example, the first device is a charger and the second device is a power tool; the first device is a power tool and the second device is a charger; or the first device is a first power tool and the second device is a second power tool.

In an example, the power tool includes an electric drill, a mower, a chainsaw, a blower, a hedge trimmer, or a string trimmer.

A firmware upgrade method for a power tool system is provided. The power tool system includes a first device and multiple second devices. The first device includes a first communication module configured to communicate with a remote device; a second communication module configured to communicate with each of the multiple second devices, where the second communication module is a Bluetooth module; and a memory configured to store data. Each of the multiple second devices includes a third communication module configured to communicate with the first device, where the third communication module is a Bluetooth module, the multiple second devices communicate with each other through the third communication module, and the multiple second devices form a first Bluetooth grid. The firmware upgrade method includes the following: the first device downloads, from the remote device through the first communication module, a first upgrade package applicable to one of the multiple second devices and stores the first upgrade package into the memory; the first device transmits the first upgrade package to one of the multiple second devices through the second communication module; and the one of the multiple second devices that receives the first upgrade package transmits the first upgrade package to another second device in the first Bluetooth grid through the third communication module, and the first upgrade package is used for an upgrade.

In an example, the power tool system further includes multiple third devices, each of the multiple third devices is different from each of the multiple second devices, each of the multiple third devices includes a fourth communication module configured to communicate with the first device, the fourth communication module is a Bluetooth module, the multiple third devices communicate with each other through the fourth communication module, and the multiple third devices form a second Bluetooth grid. The firmware upgrade method further includes the following: the first device downloads, from the remote device through the first communication module, a second upgrade package applicable to one of the multiple third devices and stores the second upgrade package into the memory; the first device transmits the second upgrade package to one of the multiple third devices through the second communication module; and the one of the multiple third devices that receives the second upgrade package transmits the second upgrade package to another third device in the second Bluetooth grid through the fourth communication module, and the second upgrade package is used for an upgrade.

In an example, the first communication module includes at least one of radio, Bluetooth, or a cellular network.

In an example, the remote device includes at least one of a mobile phone, a cloud server, or a laptop computer.

In an example, the first device is different from each of the multiple second devices.

In an example, the first device is a charger and each of the multiple second devices is a power tool; or the first device is a power tool and each of the multiple second devices is a charger.

A firmware upgrade method for a power tool system is provided. The power tool system includes a first device, a battery pack, and a second device. The first device includes a wireless communication module configured to communicate with a remote device, where the wireless communication module is capable of downloading data from the remote device; a memory configured to at least store data; and a first interface configured to be electrically connected to the battery pack. The battery pack includes a device interface configured to be electrically connected to the first device and the second device; and a memory configured to at least store data. The second device includes a second interface configured to be electrically connected to the battery pack. The firmware upgrade method includes the following: the first device downloads an upgrade package from the remote device and stores the upgrade package into the memory of the first device; the first device is electrically connected to the battery pack, and the first device transmits the upgrade package to the battery pack via the first interface and the device interface; the battery pack receives the upgrade package, the battery pack uses the upgrade package for an upgrade in the case where the upgrade package is applicable to the battery pack, and the battery pack stores the upgrade package into the memory of the battery pack in the case where the upgrade package is not applicable to the battery pack; the battery pack is electrically connected to the second device, and the battery pack transmits the upgrade package to the second device via the device interface and the second interface; and the second device receives the upgrade package and uses the upgrade package for an upgrade.

In an example, the first device is a charger and the second device is a power tool.

In an example, the method further includes the following: after the charger completes charging of the battery pack, the charger transmits the upgrade package to the battery pack.

In an example, the method further includes the following: when the power tool is in a non-operating state, the battery pack transmits the upgrade package to the power tool.

In an example, the first device is a power tool and the second device is a charger.

In an example, the first device is a first power tool and the second device is a second power tool.

A charging system includes a charger and a battery pack. The charger includes a wireless communication module configured to communicate with a remote device, where the wireless communication module is capable of downloading data from the remote device; a memory configured to at least store data; and a battery pack interface configured to be electrically connected to the battery pack. The battery pack includes a charger interface configured to be electrically connected to the charger. The charger is configured to download, from the remote device through the wireless communication module, an upgrade package applicable to the battery pack, store the upgrade package into the memory, and transmit the upgrade package to the battery pack via the battery pack interface and the charger interface.

In an example, after the charger completes charging of the battery pack, the charger transmits the upgrade package to the battery pack.

In an example, the wireless communication module includes at least one of radio, Bluetooth, or a cellular network.

In an example, the remote device includes at least one of a mobile phone, a cloud server, or a laptop computer.

In an example, the system performs a firmware upgrade through Bluetooth networking or via a DT link.

In an example, the first electrical device is a power tool and the first sub-device is a battery pack for the first electrical device.

In an example, the first electrical device is a battery pack and the first sub-device is a charger or a power tool for the first electrical device.

In an example, the first electrical device is a charger and the first sub-device is a battery pack for the first electrical device.

In an example, the basic information of the first sub-device includes firmware version information of the first sub-device.

In an example, the main image of the first electrical device further includes an icon of the first electrical device.

In an example, a communication manner between the first electrical device and the first sub-device includes Bluetooth communication or DT communication.

An external device includes a display, a wireless communication unit, and an electronic processor. The electronic processor is configured to: display a list of electrical devices on a first image of the display, where the external device is configured to communicate with each of the electrical devices included in the list of electrical devices; receive, via the display, a selection of a first electrical device included in the list of electrical devices, and in response to receiving the selection of the first electrical device, display a main image of the first electrical device on the display, where the main image of the first electrical device includes basic information of the first electrical device and a tab of sub-devices associated with the first electrical device; receive, via the display, a selection of the tab of sub-devices associated with the first electrical device, and in response to receiving the selection of the tab of sub-devices associated, display a list of sub-devices associated with the first electrical device on the display, where the first electrical device is configured to be communicatively connected to each of the sub-devices included in the list of sub-devices associated with the first electrical device; receive, via the display, a selection of a first sub-device included in the list of sub-devices associated with the first electrical device, and in response to receiving the selection of the first sub-device, display a main image of the first sub-device on the display, where the main image of the first sub-device includes basic information of the first sub-device and an upgrade tab; and receive, via the display, a selection of the upgrade tab, and send, via the wireless communication unit, a command to the first electrical device to enable the first electrical device to download an upgrade package for the first sub-device to upgrade the first sub-device when the first electrical device is communicatively connected to the first sub-device.

An external device includes a display, a wireless communication unit, and an electronic processor. The electronic processor is configured to: display a list of power tool devices on a first image of the display, where the external device is configured to communicate with each of the power tool devices included in the list of power tool devices; receive, via the display, a selection of a first power tool included in the list of power tool devices, and in response to receiving the selection of the first power tool, display a main image of the first power tool on the display, where the main image includes at least an icon of the first power tool; and in the case where the external device is communicatively connected to the first power tool via the wireless communication unit, cause the icon to dynamically map a state of the first power tool.

In an example, in the case where the external device is communicatively connected to the first power tool via the wireless communication unit, the icon is dynamic.

In an example, in the case where the external device is not communicatively connected to the first power tool, the icon is static.

In an example, in the case where the external device is communicatively connected to the first power tool via the wireless communication unit and the first power tool is a garden tool, the main image further includes a graphical display of weather at a position of the first power tool.

In an example, the icon is an overall view of the first power tool.

In an example, in the case where the external device is communicatively connected to the first power tool via the wireless communication unit and the first power tool is in a working state, a working component of the icon moves cyclically.

### BRIEF DESCRIPTION OF DRAWINGS

FIG. 1 is a structural diagram of a power tool system according to example one of the present application.
FIG. 2 is a flowchart of a firmware upgrade method for a power tool system according to example two of the present application.
FIG. 3 is a structural diagram of a power tool system according to example two of the present application.
FIG. 4 is a structural diagram of another power tool system according to example two of the present application.
FIG. 5 is a flowchart of another firmware upgrade method for a power tool system according to example two of the present application.
FIG. 6 is a flowchart of a firmware upgrade method for a power tool system according to example three of the present application.
FIG. 7 is a structural diagram of a power tool system according to example three of the present application.
FIG. 8 is a structural view of a charger according to example three of the present application.
FIG. 9 is a structural view of a battery pack according to example three of the present application.
FIG. 10 is a structural view of an electric drill as a power tool according to example three of the present application.
FIG. 11 is a structural view of a mower as a power tool according to example three of the present application.
FIG. 12 is a structural view of a chainsaw as a power tool according to example three of the present application.
FIG. 13 is a structural view of a blower as a power tool according to example three of the present application.
FIG. 14 is a structural view of a hedge trimmer as a power tool according to example three of the present application.
FIG. 15 is a structural view of a string trimmer as a power tool according to example three of the present application.
FIG. 16 is a structural view illustrating an application scenario according to example three of the present application.
FIG. 17 is a structural diagram of a charging system according to example four of the present application.
FIG. 18 is a structural diagram of an external device according to example five of the present application.
FIG. 19 is a schematic diagram of a list of electrical devices according to example five of the present application.
FIG. 20 is a schematic diagram of a main image of a first electrical device according to example five of the present application.
FIG. 21 is a schematic diagram of a main image of a first sub-device according to example five of the present application.
FIG. 22 is a structural view illustrating an application scenario of garden tools according to example six of the present application.
FIG. 23 is a schematic diagram of a list of power tool devices according to example six of the present application.
FIG. 24 is a schematic diagram of a main image of a first power tool according to example six of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

### Example one

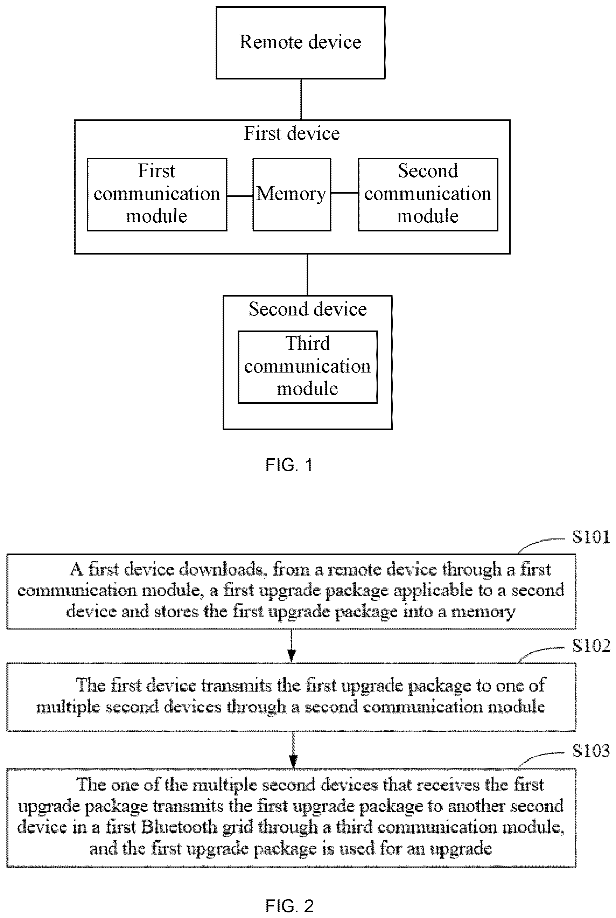

FIG. 1 is a structural diagram of a power tool system according to example one of the present application. This example can be applied to a firmware upgrade of a device. As shown in FIG. 1, the system mainly includes a first device and a second device. In this example, the first device and the second device are different devices. The first device mainly includes a first communication module, a second communication module, and a memory, where the first communication module is configured to communicate with a remote device, the second communication module is configured to communicate with the second device, and the memory is configured to store data. The second device mainly includes a third communication module configured to communicate with the first device.

In this example, the first device is configured to download, from the remote device through the first communication module, an upgrade package applicable to the second device, store the upgrade package into the memory, and transmit the upgrade package to the second device through the second communication module. Therefore, in this example, the first device may be used as an intermediate point, and the second device may indirectly acquire the upgrade package for the firmware upgrade from the remote device via the first device and complete the firmware upgrade according to the upgrade package.

The first communication module and the second communication module support different communication protocols. In this example, the first communication module and the second communication module may each use a Transmission Control Protocol (TCP), a User Datagram Protocol (UDP), a Media Access Control (Multiple Access Control Protocol, MAC) protocol, or the like for communication. Therefore, the first communication module and the second communication module may use different communication protocols for communication. Examples are given in this example, which are not to limit specific types of the communication protocols.

Optionally, the system performs the firmware upgrade through Bluetooth networking or via a data transmission (DT) link.

In this example, when performing the firmware upgrade, the system may use the Bluetooth networking or the DT link for the firmware upgrade. The Bluetooth networking refers to that the first device and the second device form a Bluetooth grid and the first device and the second device perform communication transmission using Bluetooth. The DT link refers to that the first device and the second device perform data transmission via a data interface, for example, the first device implements the firmware upgrade of the second device via a device interface of a battery pack. Examples are given in this example, which are not to limit a specific manner of the firmware upgrade.

Optionally, the first communication module includes at least one of radio, Bluetooth, or a cellular network. Bluetooth may include Bluetooth Low Energy (BLE).

In this example, the first device specifically downloads, from the remote device through the first communication module, the upgrade package applicable to the second device, and the first communication module includes at least one of radio, Bluetooth, or the cellular network so that when communicating with the remote device, the first device may use a radio communication manner, a Bluetooth communication manner, or a cellular network communication manner to perform data transmission, thereby acquiring the upgrade package sent by the remote device. In this example, a specific type of the first communication module is not limited.

The first device is a charger and the second device is a power tool; the first device is a power tool and the second device is a charger; or the first device is a first power tool and the second device is a second power tool. In specific applications, the power tool may include an electric drill, a mower, a chainsaw, a blower, a hedge trimmer, or a string trimmer. Examples are given in this example, which are not to limit a specific type of the power tool.

In the example of the present application, the first device downloads from the remote device the upgrade package applicable to the second device and transmits the upgrade package to the second device, the first device is different from the second device, and the first device and the second device may be located in different subnets so that during the firmware upgrade, information transmission is not limited to the same devices in the same subnet, embodying the convenience and universality of wireless communication.

### Example two

FIG. 2 is a flowchart of a firmware upgrade method for a power tool system according to example two of the present application. This example is mainly applied to a firmware upgrade of a device. As shown in FIG. 2, the method includes the steps below.

In step S101, a first device downloads, from a remote device through a first communication module, a first upgrade package applicable to a second device and stores the first upgrade package into a memory.

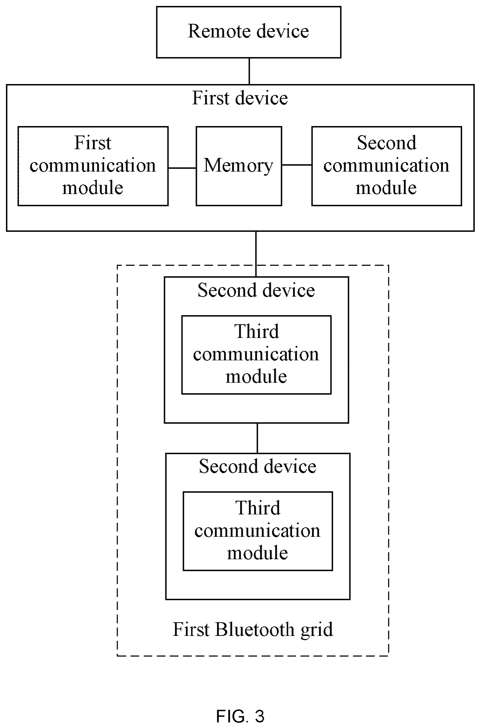

FIG. 3 is a structural diagram of a power tool system of the present application. As shown in FIG. 3, the power tool system mainly includes a first device and multiple second devices. FIG. 2 shows two second devices as an example. In this example, the specific number of second devices is not limited. Moreover, the first device and the second device are two different devices and have different internal structures. In this example, the first device is a charger and the second device is a power tool, or the first device is a power tool and the second device is a charger.

In this example, the first device includes a first communication module, a second communication module, and a memory, and each second device includes only one third communication module. For the first device, the included first communication module is configured to communicate with the remote device, the second communication module is configured to communicate with the second device, the second communication module in this example may be a Bluetooth module, and the memory is configured to store data. For the second device, the included third communication module is configured to communicate with the first device, the third communication module is a Bluetooth module, the multiple second devices communicate with each other through the third communication module, and the multiple second devices in this example form a first Bluetooth grid.

In this example, the first device specifically downloads, from the remote device through the first communication module, the first upgrade package applicable to the second device, and the first communication module includes at least one of radio, Bluetooth, or a cellular network so that when communicating with the remote device, the first device may use a radio communication manner, a Bluetooth communication manner, or a cellular network communication manner to perform data transmission, thereby acquiring the first upgrade package sent by the remote device.

In this example, the remote device includes at least one of a mobile phone, a cloud server, or a laptop computer, a management user may operate on the remote device to determine the second device to be upgraded, the remote device generates, according to an upgrade selection of the management user, the first upgrade package matching the device to be upgraded, and the first device communicates with the remote device through the first communication module in a radio, Bluetooth, or cellular network manner to download the first upgrade package applicable to the second device and stores the first upgrade package into the memory.

In step S102, the first device transmits the first upgrade package to one of the multiple second devices through the second communication module.

In this example, the first device transmits the acquired first upgrade package to one second device in the first Bluetooth grid through the second communication module. Since the second communication module is the Bluetooth module whose communication distance is within a certain range, the first device may specifically transmit the first upgrade package to one closest second device or transmit the first upgrade package to one farthest second device within a communication range. Examples are given in this example, and the management user may set, according to actual requirements, a selection criterion of the second device receiving the first upgrade package.

In step S103, the second device that receives the first upgrade package transmits the first upgrade package to another second device in the first Bluetooth grid through the third communication module, and the first upgrade package is used for an upgrade.

Since the first upgrade package includes a device identifier, the second device that receives the first upgrade package identifies the device identifier and specifically determines which second device the first upgrade package is applicable to. When determining that the first upgrade package is applicable to itself, the second device is upgraded according to the first upgrade package. When determining that the first upgrade package is not applicable to itself, the second device sequentially transmits the first upgrade package backwards through the third communication module, the Bluetooth module, until the second device to which the first upgrade package is applicable receives the first upgrade package, and the first upgrade package stops being transmitted and is used for the firmware upgrade. FIG. 3 shows an example in which the first Bluetooth grid includes two second devices. In practical application, the first Bluetooth grid generally includes multiple second devices, and the specific number of second devices in the first Bluetooth grid is not limited in this example.

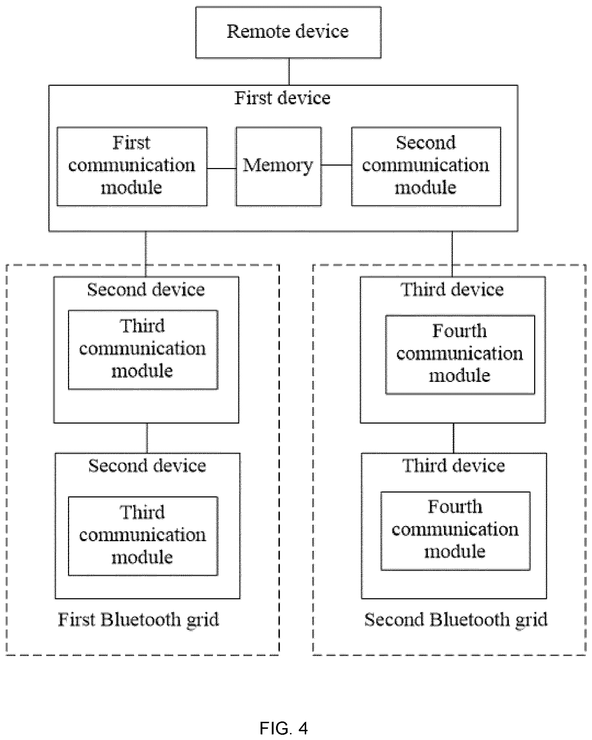

FIG. 4 is a structural diagram of another power tool system in this example. In FIG. 4, two Bluetooth grids composed of two different types of devices are mainly included, that is, the first Bluetooth grid composed of the multiple second devices and a second Bluetooth grid composed of multiple third devices.

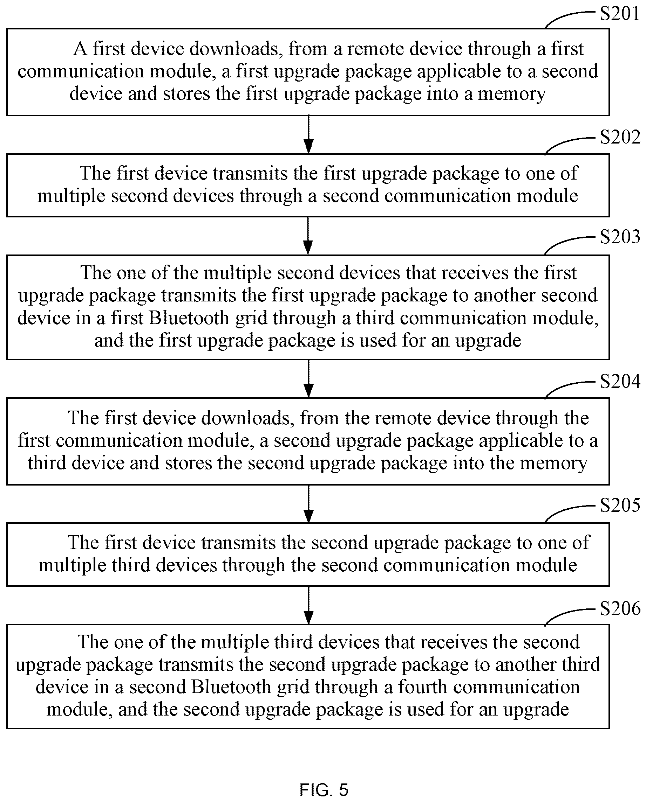

As shown in FIG. 5, which is a flowchart of a firmware upgrade method matching the power tool system, the method includes the steps below.

In step S201, the first device downloads, from the remote device through the first communication module, the first upgrade package applicable to the second device and stores the first upgrade package into the memory.

In step S202, the first device transmits the first upgrade package to one of the multiple second devices through the second communication module.

In step S203, the second device that receives the first upgrade package transmits the first upgrade package to another second device in the first Bluetooth grid through the third communication module, and the first upgrade package is used for the upgrade.

In step S204, the first device downloads, from the remote device through the first communication module, a second upgrade package applicable to a third device and stores the second upgrade package into the memory.

In this example, the power tool system includes multiple Bluetooth grids, for example, includes not only the first Bluetooth grid composed of the multiple second devices but also the second Bluetooth grid composed of the multiple third devices, where the third device is different from the second device. In this example, the third device may include a fourth communication module configured to communicate with the first device, the multiple third devices communicate with each other through the fourth communication module, and the fourth communication module in this example is also a Bluetooth module.

In this example, the first device further downloads, from the remote device through the first communication module, the second upgrade package applicable to the third device. The management user may operate on the remote device to determine the third device to be upgraded, the remote device generates, according to an upgrade selection of the management user, the second upgrade package matching the device to be upgraded, and the first device communicates with the remote device through the first communication module in the radio, Bluetooth, or cellular network manner to download the second upgrade package applicable to the third device and stores the second upgrade package into the memory. An order of step S204 and step S201 is not limited in this example, that is, an order in which the first device downloads the first upgrade package and the second upgrade package from the remote device is not limited in the present application.

In step S205, the first device transmits the second upgrade package to one of the multiple third devices through the second communication module.

In this example, the first device transmits the acquired second upgrade package to one third device in the second Bluetooth grid through the second communication module. Since the second communication module is the Bluetooth module whose communication distance is within a certain range, the first device may transmit the second upgrade package to one closest third device or transmit the second upgrade package to one farthest third device within the communication range. Examples are given in this example, and the management user may set, according to actual requirements, a selection criterion of the third device receiving the second upgrade package.

In step S206, the third device that receives the second upgrade package transmits the second upgrade package to another third device in the second Bluetooth grid through the fourth communication module, and the second upgrade package is used for an upgrade.

Since the second upgrade package also includes a device identifier, the third device that receives the second upgrade package identifies the device identifier and specifically determines which third device the second upgrade package is applicable to. When determining that the second upgrade package is applicable to itself, the third device is upgraded according to the second upgrade package. When determining that the second upgrade package is not applicable to itself, the third device sequentially transmits the second upgrade package backwards through the fourth communication module, the Bluetooth module, until the third device to which the second upgrade package is applicable receives the second upgrade package, and the second upgrade package stops being transmitted and is used for the firmware upgrade. FIG. 4 shows an example in which the second Bluetooth grid includes two third devices. In practical application, the second Bluetooth grid generally includes multiple third devices, and the specific number of third devices in the second Bluetooth grid is not limited in this example.

### Example three

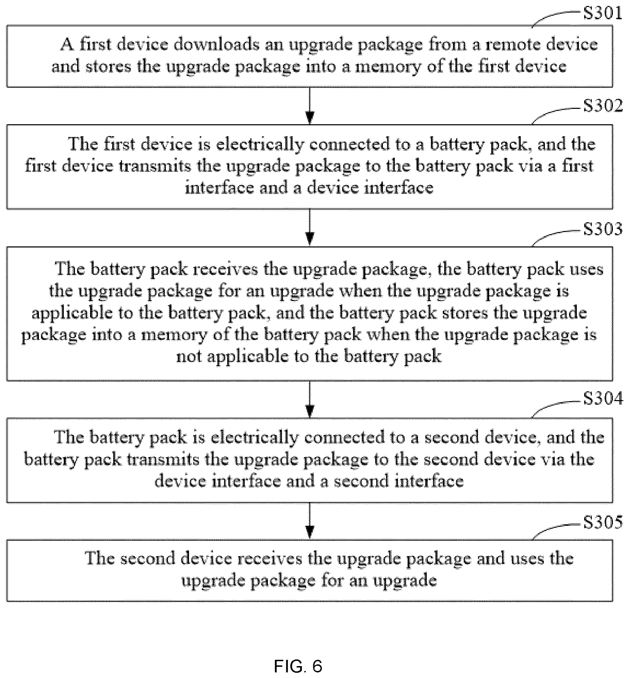

FIG. 6 is a flowchart of a firmware upgrade method for a power tool system according to example three of the present application. This example is mainly applied to a firmware upgrade of a device. As shown in FIG. 6, the method includes the steps below.

In step S301, a first device downloads an upgrade package from a remote device and stores the upgrade package into a memory of the first device.

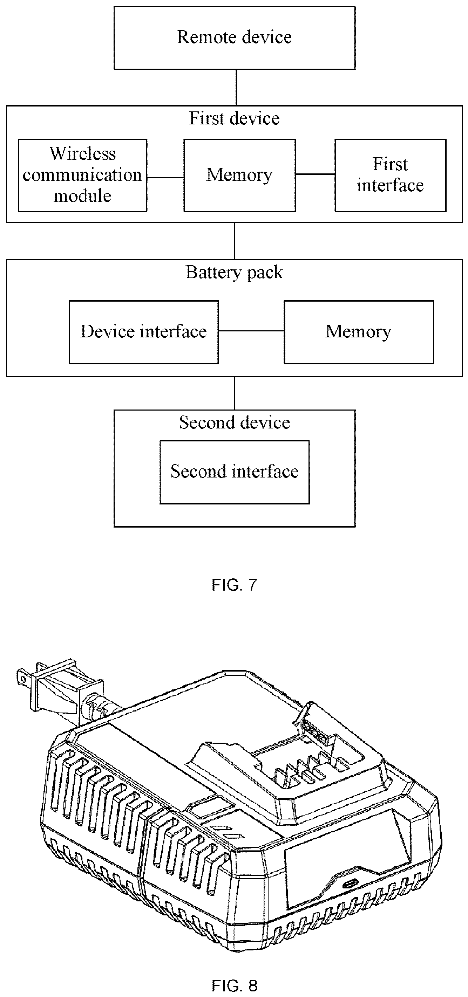

FIG. 7 is a structural diagram of a power tool system according to an example of the present application. The power tool system includes the first device, a battery pack, and a second device, the first device specifically includes a wireless communication module, a memory, and a first interface, the battery pack includes a device interface and a memory, and the second device includes a second interface. In the first device, the wireless communication module is configured to communicate with the remote device and capable of downloading data from the remote device, the memory is configured to at least store data, and the first interface is configured to be electrically connected to the battery pack. In the battery pack, the device interface is configured to be electrically connected to the first device and the second device, and the memory is configured to at least store data. The second interface in the second device is configured to be electrically connected to the battery pack.

The first device may download the upgrade package from the remote device and store the upgrade package into the memory of the first device. The first device may be a charger and the second device may be a power tool.

The first device may be a power tool and the second device may be a charger; or the first device and the second device may be different types of power tools, for example, the first device is a first power tool and the second device is a second power tool. In this example, specific types of the first device and the second device are not limited.

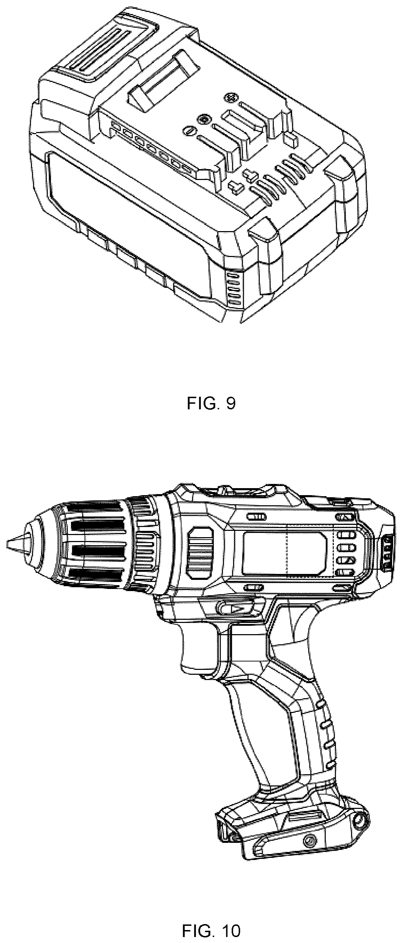

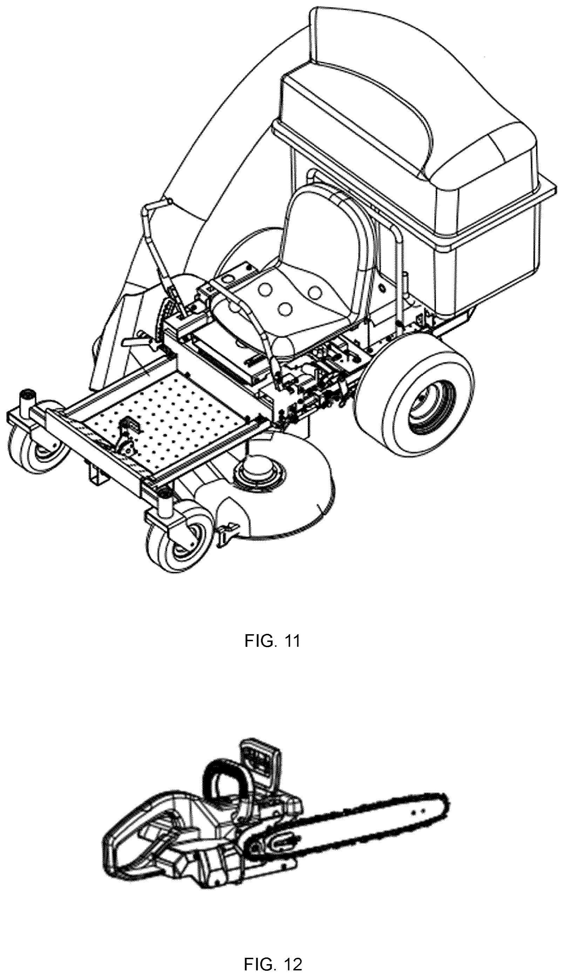

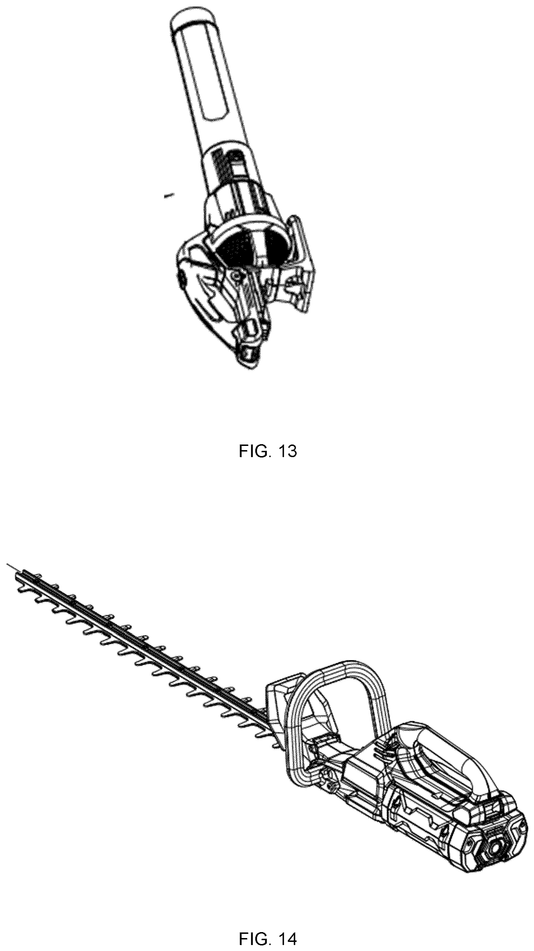

The power tool in this example may be a handheld power tool, such as a drill, a hedge trimmer, or a sander. Alternatively, the power tool may be a table tool, such as a table saw or a miter saw. Alternatively, the power tool may be a hand-push power tool, such as a push mower or a push snow thrower. Alternatively, the power tool may be a riding power tool, such as a riding mower, a riding vehicle, or an all-terrain vehicle. Alternatively, the power tool may be a robotic tool, such as a robotic mower or a robotic snow thrower. In some examples, the power tool may be an electric drill, an electric lamp, an electric vehicle, or the like. In some examples, the power tool may be a garden tool, such as a hedge trimmer, a blower, a mower, or a chainsaw; or the power tool may be a decorating tool, such as a screwdriver, a nail gun, a circular saw, or a sander. In some examples, the power tool may be a vegetation care tool, such as a string trimmer, a mower, a hedge trimmer, or a chainsaw. Alternatively, the power tool may be a cleaning tool, such as a blower, a snow thrower, or a washer. Alternatively, the power tool may be a drilling tool, such as a drill, a screwdriver, a wrench, or an electric hammer. Alternatively, the power tool may be a sawing tool, such as a reciprocating saw, a jigsaw, or a circular saw. Alternatively, the power tool may be a table tool, such as a table saw, a miter saw, a metal cutter, or a router. Alternatively, the power tool may be a grinding tool, such as an angle grinder or a sander. Alternatively, the power tool may be another tool such as a lamp or a fan. FIG. 8 is a structural view of the charger, FIG. 9 is a structural view of the battery pack, FIG. 10 is a structural view of the electric drill as the power tool, FIG. 11 is a structural view of the mower as the power tool, FIG. 12 is a structural view of the chainsaw as the power tool, and FIG. 13 is a structural view of the blower as the power tool.

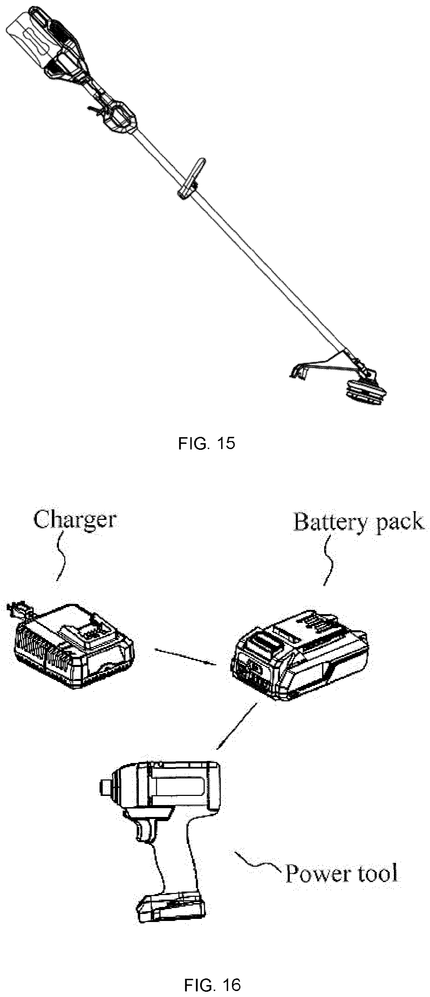

FIG. 14 is a structural view of the hedge trimmer as the power tool, and FIG. 15 is a structural view of the string trimmer as the power tool. Examples are given in this example, which are not to limit a type and a specific structure of the power tool.

In step S302, the first device is electrically connected to the battery pack, and the first device transmits the upgrade package to the battery pack via the first interface and the device interface.

FIG. 16 is a structural view illustrating an application scenario of the present application. In the case where the first device is the charger and the second device is the power tool, the first device, that is, the charger, is electrically connected to the battery pack. Before transmitting the upgrade package to the battery pack via the first interface and the device interface, the charger needs to ensure that the charger completes charging of the battery pack. Therefore, a charging process and a data transmission process between the charger and the battery pack cannot happen in parallel, and the charger and the battery pack can either be in a charging state or be in a data transmission state separately.

In step S303, the battery pack receives the upgrade package, the battery pack uses the upgrade package for an upgrade in the case where the upgrade package is applicable to the battery pack, and the battery pack stores the upgrade package into the memory of the battery pack in the case where the upgrade package is not applicable to the battery pack.

After being charged, the battery pack receives the upgrade package from the charger. Since the upgrade package includes a device identifier, the battery pack identifies the device identifier in the upgrade package after receiving the upgrade package. When determining that the device identifier is a battery pack identifier, the battery pack determines that the upgrade package is applicable to the battery pack and uses the upgrade package for the upgrade. When determining that the device identifier is not the battery pack identifier, the battery pack determines that the upgrade package is not applicable to the battery pack and temporarily stores the upgrade package into the memory of the battery pack.

In step S304, the battery pack is electrically connected to the second device, and the battery pack transmits the upgrade package to the second device via the device interface and the second interface.

The battery pack is electrically connected to the second device, that is, the power tool. Before transmitting the upgrade package to the second device via the device interface and the second interface, the battery pack needs to acquire a state of the power tool. The state of the power tool includes an operating state and a non-operating state. When determining that the power tool is in the non-operating state, the battery pack transmits the upgrade package to the upgrade package, thereby avoiding an increase in the data processing pressure of the power tool in the operating state.

In step S305, the second device receives the upgrade package and uses the upgrade package for an upgrade.

After receiving the upgrade package, the second device, that is, the power tool uses the acquired upgrade package to upgrade itself, where an upgrade content may be improving a specified function or adjusting a specified parameter. The upgrade content of the power tool is not limited in this example.

### Example four

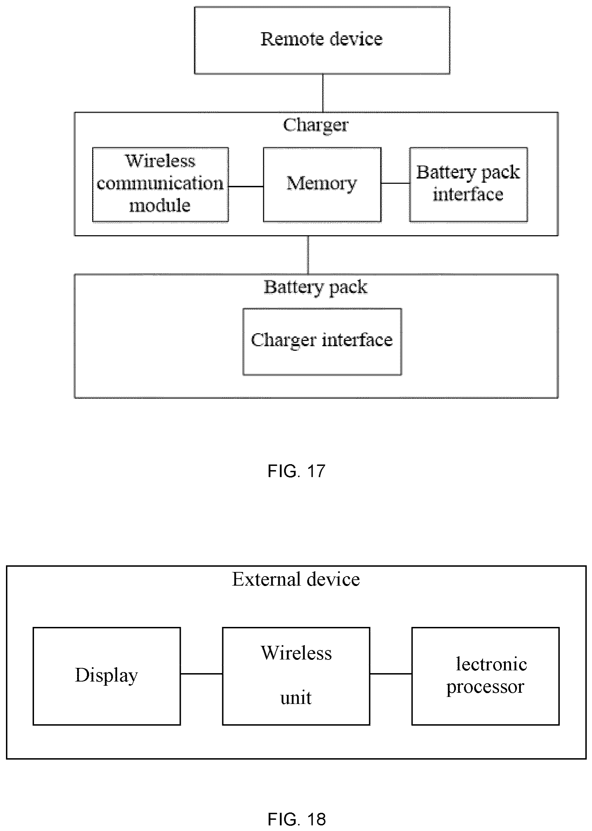

FIG. 17 is a structural diagram of a charging system according to example four of the present application. This example can be applied to a firmware upgrade of a battery pack. As shown in FIG. 17, the system mainly includes a charger and the battery pack.

In this example, the charger may include a wireless communication module, a memory, and a battery pack interface, and the battery pack mainly includes a charger interface. In the charger, the wireless communication module is configured to communicate with a remote device and capable of downloading data from the remote device, the memory is configured to at least store data, and the battery pack interface is configured to be electrically connected to the battery pack. The charger interface in the battery pack is configured to be electrically connected to the charger.

In this example, the charger is configured to download, from the remote device through the wireless communication module, an upgrade package applicable to the battery pack, store the upgrade package into the memory, and transmit the upgrade package to the battery pack via the battery pack interface and the charger interface.

In this example, before transmitting the upgrade package to the battery pack via the battery pack interface and the charger interface, the charger needs to ensure that the charger completes charging of the battery pack. Therefore, a charging process and a data transmission process between the charger and the battery pack cannot happen in parallel, and the charger and the battery pack can either be in a charging state or be in a data transmission state separately, thereby avoiding excessive processing pressure of the charger and the battery pack due to multi-threaded parallel operations.

Optionally, after the charger completes the charging of the battery pack, the charger transmits the upgrade package to the battery pack.

In this example, before transmitting the upgrade package to the battery pack via the battery pack interface and the charger interface, the charger needs to ensure that the charger completes the charging of the battery pack. Therefore, the charging process and the data transmission process between the charger and the battery pack cannot happen in parallel, and the charger and the battery pack can either be in the charging state or be in the data transmission state separately.

In this example, the charger may download, from the remote device through the wireless communication module, the upgrade package applicable to the battery pack, and the wireless communication module includes at least one of radio, Bluetooth, or a cellular network so that when communicating with the remote device, the charger may use a radio communication manner, a Bluetooth communication manner, or a cellular network communication manner to perform data transmission, thereby acquiring the upgrade package sent by the remote device. In this example, the remote device includes at least one of a mobile phone, a cloud server, or a laptop computer. In this example, types of the wireless communication module and the remote device are not limited.

In this example, when performing the firmware upgrade on the battery pack, the charging system may use Bluetooth networking or a DT link for the firmware upgrade. A firmware upgrade manner through the Bluetooth networking and a firmware upgrade manner via the DT link have been described in example one, and the details are not repeated in this example.

### Example five

FIG. 18 is a structural diagram of an external device according to example five of the present application. The external device includes a display, a wireless communication unit, and an electronic processor.

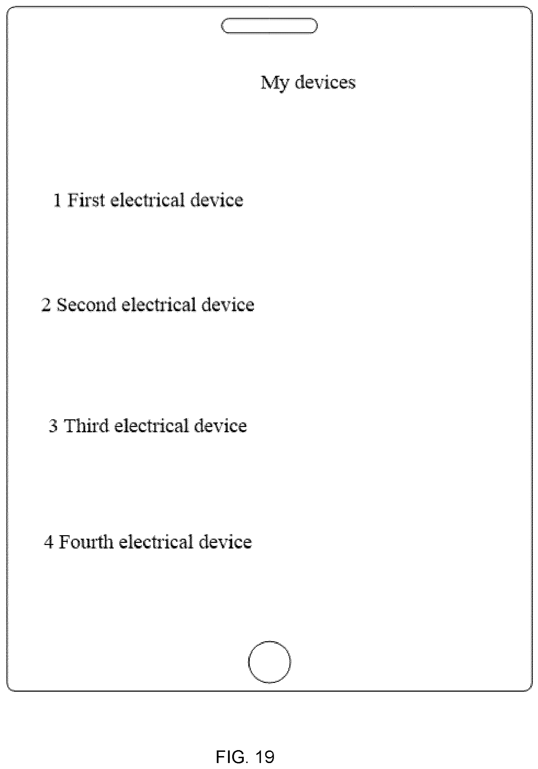

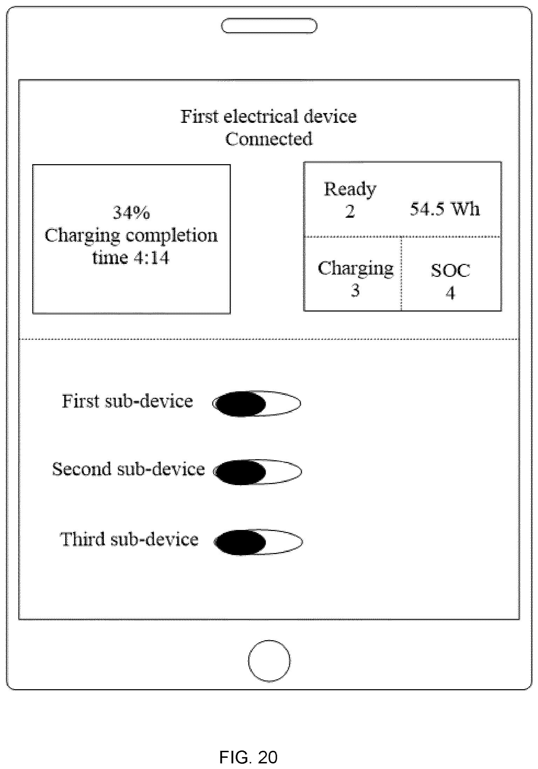

In this example, the electronic processor is configured to display a list of electrical devices on a first image of the display. FIG. 19 is a schematic diagram of the list of electrical devices, where the list of electrical devices includes multiple electrical devices connected to the external device. The external device is configured to communicate with each electrical device included in the list of electrical devices. In this example, an example is used where the list of electrical devices includes four electrical devices, a first electrical device, a second electrical device, a third electrical device, and a fourth electrical device. However, in practical application, the number of electrical devices included in the list of electrical devices is not limited. A user may operate on the display to select an electrical device from the list of electrical devices. In the case where a selection of the first electrical device included in the list of electrical devices is received via the display, in response to receiving the selection of the first electrical device, a main image of the first electrical device is displayed on the display. As shown in FIG. 20, which is a schematic diagram of the main image of the first electrical device, the main image of the first electrical device includes basic information of the first electrical device and a tab of sub-devices associated with the first electrical device. Additionally, the main image of the first electrical device may further include an icon of the first electrical device. Specific contents included in the main image of the first electrical device are not limited in this example. A selection of the tab of sub-devices associated with the first electrical device is received via the display, and in response to receiving the selection of the tab of sub-devices associated, a list of sub-devices associated with the first electrical device is displayed on the display. In FIG. 20, the list of sub-devices associated is displayed. In this example, an example is used where the list of sub-devices associated includes three sub-devices, a first sub-device, a second sub-device, and a third sub-device. However, in practical application, the number of sub-devices included in the list of sub-devices associated is not limited. The first electrical device is configured to be communicatively connected to each sub-device included in the list of sub-devices associated with the first electrical device.

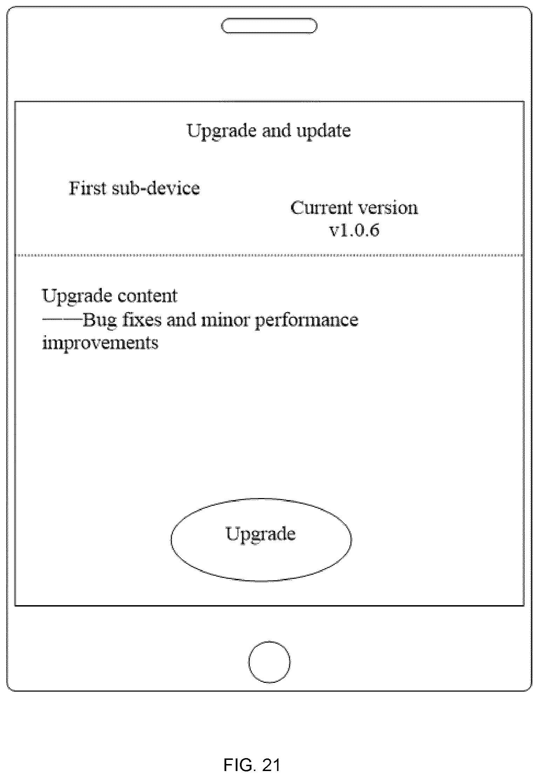

A selection of the first sub-device included in the list of sub-devices associated with the first electrical device is received via the display, and in response to receiving the selection of the first sub-device, a main image of the first sub-device is displayed on the display. As shown in FIG. 21, which is a schematic diagram of the main image of the first sub-device, the main image of the first sub-device includes basic information of the first sub-device and an upgrade tab, and the basic information may include firmware version information of the first sub-device. A selection of the upgrade tab is received via the display, and a command is sent to the first electrical device via the wireless communication unit to enable the first electrical device to download an upgrade package for the first sub-device to upgrade the first sub-device when the first electrical device is communicatively connected to the first sub-device.

In this example, the first electrical device is a power tool and the first sub-device is a battery pack for the first electrical device; the first electrical device is a battery pack and the first sub-device is a charger or a power tool for the first electrical device; or the first electrical device is a charger and the first sub-device is a battery pack for the first electrical device. In this example, specific types of the first electrical device and the second electrical device are not limited.

A communication manner between the first electrical device and the first sub-device may include Bluetooth communication or DT communication. For specific principles of Bluetooth communication, reference may be made to example two. For principles of DT communication, reference may be made to example three. The specific principles of Bluetooth communication and DT communication are not limited in this example.

### Example six

Example six provides an external device including a display, a wireless communication unit, and an electronic processor. For a specific structure, reference may be made to FIG. 18 in the preceding example.

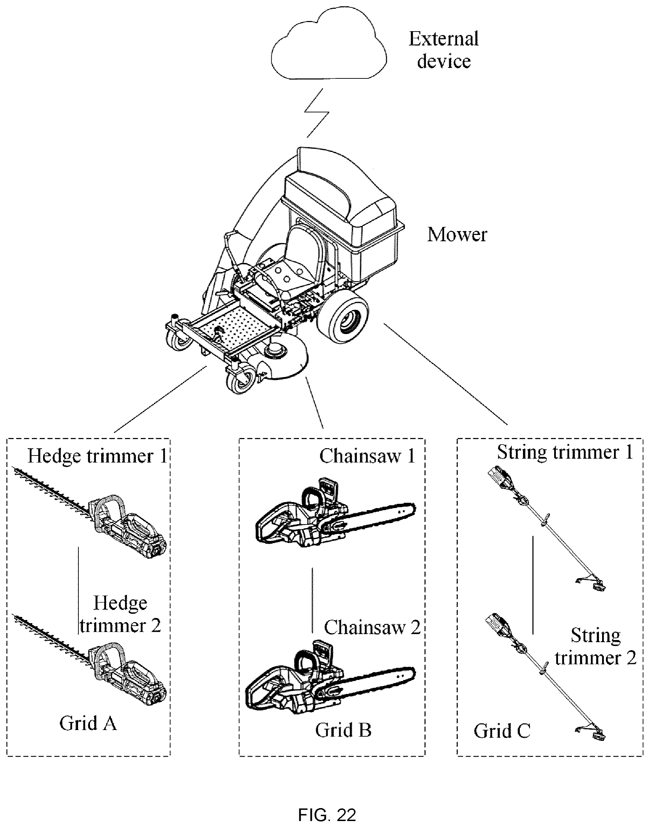

FIG. 22 is a structural view illustrating an application scenario of garden tools according to this example. The application scenario includes the external device, a mower, hedge trimmer 1 and hedge trimmer 2 in grid A, chainsaw 1 and chainsaw 2 in grid B, and string trimmer 1 and string trimmer 2 in grid C. The mower, as a root node of grids, may download from the external device an upgrade package applicable to each power tool, and the power tool that receives the upgrade package uses the upgrade package for a firmware upgrade.

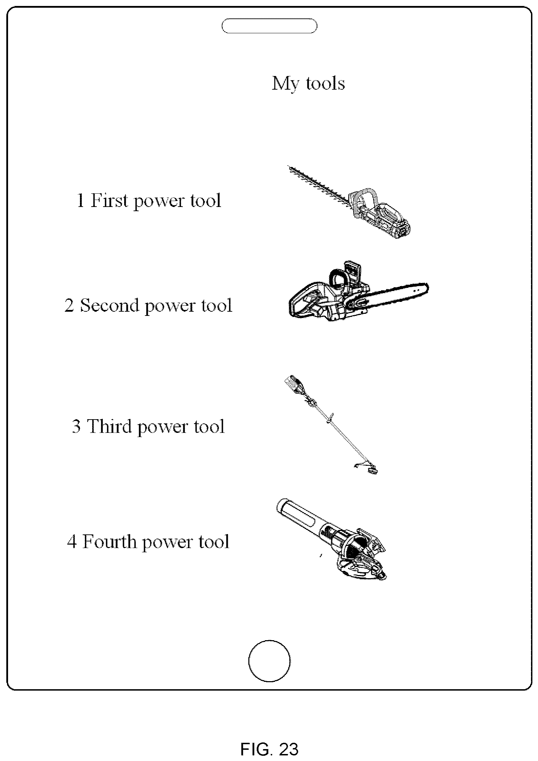

In this example, the electronic processor is configured to display a list of power tool devices on a first image of the display. As shown in FIG. 23, which is a schematic diagram of the list of power tool devices, the list of power tool devices includes multiple power tools that communicate with the external device. The external device is configured to communicate with each power tool device included in the list of power tool devices. In this example, an example is used where the list of power tool devices includes four power tools, a first power tool, a second power tool, a third power tool, and a fourth power tool. However, in practical application, the number of power tools included in the list of power tool devices is not limited. Moreover, the power tool in this example may be a garden tool, such as a chainsaw, a mower, a hedge trimmer, or a string trimmer. A specific type of the power tool is not limited in this example, and in practical application, the power tool may be added to a list of power tools as required.

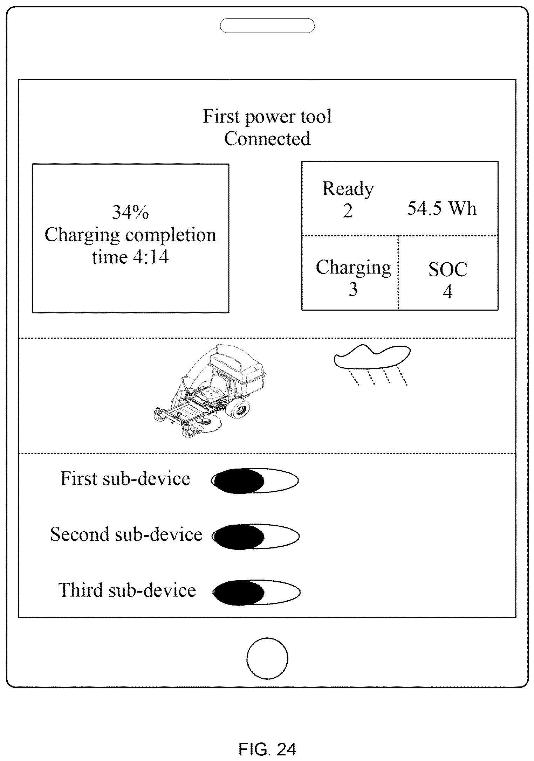

A selection of the first power tool included in the list of power tool devices is received via the display. For example, the first power tool is the mower. In response to receiving the selection of the first power tool, a main image of the first power tool is displayed on the display. As shown in FIG. 24, which is a schematic diagram of the main image of the first power tool, the main image of the first power tool includes not only basic information of the first power tool and a list of sub-devices associated with the first power tool but also an icon of the first power tool. In the case where the external device is communicatively connected to the first power tool via the wireless communication unit, the icon dynamically maps a state of the first power tool.

In this example, the icon may be an overall view of the first power tool. For example, when the first power tool is the mower in FIG. 24, the icon is specifically an overall view of the mower. The state of the first power tool includes dynamic and static, that is, the icon is dynamic when the external device is communicatively connected to the first power tool via the wireless communication unit. In the case where the external device is communicatively connected to the first power tool via the wireless communication unit and the first power tool is in a working state, a working component of the icon moves cyclically, that is, a mowing component in the icon of the mower moves cyclically all the time, making it convenient for a user to quickly and visually acquire the current working state of the first power tool. In the case where the external device is not communicatively connected to the first power tool, the icon is static, that is, the mowing component in the icon of the mower stops moving cyclically.

In the case where the external device is communicatively connected to the first power tool via the wireless communication unit and the first power tool is the garden tool, the main image further includes a graphical display of weather at a position of the first power tool. For example, when it is raining at the position of the first power tool, a rain icon is displayed in the main image of the first power tool, as shown in FIG. 24. An example is given in this example, which is not to limit a specific form of graphical display.

After receiving the upgrade package from the external device, the mower determines which associated sub-power tool the upgrade package is adapted to. When determining that the upgrade package is adapted to hedge trimmer 2 in grid A, the mower sends the upgrade package to the closest hedge trimmer 1 in grid A and indirectly sends the upgrade package to hedge trimmer 2 through hedge trimmer 1.

It is to be understood that various forms of the preceding flows may be used with steps reordered, added, or deleted. For example, the steps described in the present application may be performed in parallel, in sequence, or in a different order as long as the desired results of the technical solutions in the present application can be achieved. The execution sequence of the steps is not limited herein.

The scope of the present application is not limited to the preceding examples. It is to be understood by those skilled in the art that various modifications, combinations, subcombinations, and substitutions may be made according to design requirements and other factors. Any modifications, equivalent substitutions, improvements, and the like made within the spirit and principle of the present application are within the scope of the present application.

## Claims

1. A power tool system, comprising a first device and a second device, wherein the first device is different from the second device;
the first device comprises: a first communication module configured to communicate with a remote device;
a second communication module configured to communicate with the second device; and
a memory configured to store data;
the second device comprises a third communication module configured to communicate with the first device; and
the first device is configured to download, from the remote device through the first communication module, an upgrade package applicable to the second device, store the upgrade package into the memory, and transmit the upgrade package to the second device through the second communication module.

2. The system according to claim 1, wherein the first communication module and the second communication module support different communication protocols.

3. The system according to claim 1, wherein the system performs a firmware upgrade through Bluetooth networking or via a data transmission (DT) link.

4. The system according to claim 2, wherein the first communication module comprises at least one of radio, Bluetooth, or a cellular network.

5. The system according to claim 1, wherein the first device is a charger and the second device is a power tool; the first device is a power tool and the second device is a charger; or the first device is a first power tool and the second device is a second power tool.

6. The system according to claim 5, wherein the power tool comprises an electric drill, a mower, a chainsaw, a blower, a hedge trimmer, or a string trimmer.

7. A firmware upgrade method for a power tool system, wherein the power tool system comprises a first device and a plurality of second devices;
the first device comprises: a first communication module configured to communicate with a remote device;
a second communication module configured to communicate with each of the plurality of second devices, wherein the second communication module is a Bluetooth module; and
a memory configured to store data;
each of the plurality of second devices comprises a third communication module configured to communicate with the first device, wherein the third communication module is a Bluetooth module, the plurality of second devices communicate with each other through the third communication module, and the plurality of second devices form a first Bluetooth grid; and
the firmware upgrade method comprises: downloading, by the first device from the remote device through the first communication module, a first upgrade package applicable to one of the plurality of second devices and storing the first upgrade package into the memory;
transmitting, by the first device, the first upgrade package to one of the plurality of second devices through the second communication module; and
transmitting, by the one of the plurality of second devices that receives the first upgrade package, the first upgrade package to another second device in the first Bluetooth grid through the third communication module, and using the first upgrade package for an upgrade.

8. The method according to claim 7, wherein the power tool system further comprises a plurality of third devices, each of the plurality of third devices is different from each of the plurality of second devices, each of the plurality of third devices comprises a fourth communication module configured to communicate with the first device, the fourth communication module is a Bluetooth module, the plurality of third devices communicate with each other through the fourth communication module, and the plurality of third devices form a second Bluetooth grid; and
the firmware upgrade method further comprises: downloading, by the first device from the remote device through the first communication module, a second upgrade package applicable to one of the plurality of third devices and storing the second upgrade package into the memory;
transmitting, by the first device, the second upgrade package to one of the plurality of third devices through the second communication module; and
transmitting, by the one of the plurality of third devices that receives the second upgrade package, the second upgrade package to another third device in the second Bluetooth grid through the fourth communication module, and using the second upgrade package for an upgrade.

9. The method according to claim 7, wherein the first communication module comprises at least one of radio, Bluetooth, or a cellular network.

10. The method according to claim 7, wherein the remote device comprises at least one of a mobile phone, a cloud server, or a laptop computer.

11. The method according to claim 7, wherein the first device is different from each of the plurality of second devices.

12. The method according to claim 11, wherein the first device is a charger and each of the plurality of second devices is a power tool; or the first device is a power tool and each of the plurality of second devices is a charger.

13. A firmware upgrade method for a power tool system, wherein the power tool system comprises a first device, a battery pack, and a second device;
the first device comprises: a wireless communication module configured to communicate with a remote device, wherein the wireless communication module is capable of downloading data from the remote device;
a memory configured to at least store data; and
a first interface configured to be electrically connected to the battery pack;
the battery pack comprises a device interface configured to be electrically connected to the first device and the second device; and
a memory configured to at least store data;
the second device comprises a second interface configured to be electrically connected to the battery pack; and
the firmware upgrade method comprises: downloading, by the first device, an upgrade package from the remote device and storing the upgrade package into the memory of the first device;
electrically connecting the first device to the battery pack, and transmitting, by the first device, the upgrade package to the battery pack via the first interface and the device interface;
receiving, by the battery pack, the upgrade package, using, by the battery pack, the upgrade package for an upgrade in a case where the upgrade package is applicable to the battery pack, and storing, by the battery pack, the upgrade package into the memory of the battery pack in a case where the upgrade package is not applicable to the battery pack;
electrically connecting the battery pack to the second device, and transmitting, by the battery pack, the upgrade package to the second device via the device interface and the second interface; and
receiving, by the second device, the upgrade package and using the upgrade package for an upgrade.

14. The method according to claim 13, wherein the first device is a charger and the second device is a power tool.

15. The method according to claim 14, further comprising:
after the charger completes charging of the battery pack, transmitting, by the charger, the upgrade package to the battery pack.

16. The method according to claim 14, further comprising:
when the power tool is in a non-operating state, transmitting, by the battery pack, the upgrade package to the power tool.

17. The method according to claim 13, wherein the first device is a power tool and the second device is a charger.

18. The method according to claim 13, wherein the first device is a first power tool and the second device is a second power tool.

19. A charging system, comprising a charger and a battery pack;
the charger comprises: a wireless communication module configured to communicate with a remote device, wherein the wireless communication module is capable of downloading data from the remote device;
a memory configured to at least store data; and
a battery pack interface configured to be electrically connected to the battery pack;
the battery pack comprises a charger interface configured to be electrically connected to the charger; and
the charger is configured to download, from the remote device through the wireless communication module, an upgrade package applicable to the battery pack, store the upgrade package into the memory, and transmit the upgrade package to the battery pack via the battery pack interface and the charger interface.

20. The system according to claim 19, wherein after the charger completes charging of the battery pack, the charger transmits the upgrade package to the battery pack.

21. The system according to claim 19, wherein the wireless communication module comprises at least one of radio, Bluetooth, or a cellular network.

22. The system according to claim 21, wherein the remote device comprises at least one of a mobile phone, a cloud server, or a laptop computer.

23. The system according to claim 19, wherein the system performs a firmware upgrade through Bluetooth networking or via a data transmission (DT) link.

24. An external device, comprising a display, a wireless communication unit, and an electronic processor;
wherein the electronic processor is configured to: display a list of electrical devices on a first image of the display, wherein the external device is configured to communicate with each of the electrical devices comprised in the list of electrical devices;
receive, via the display, a selection of a first electrical device comprised in the list of electrical devices, and in response to receiving the selection of the first electrical device, display a main image of the first electrical device on the display, wherein the main image of the first electrical device comprises basic information of the first electrical device and a tab of sub-devices associated with the first electrical device;
receive, via the display, a selection of the tab of sub-devices associated with the first electrical device, and in response to receiving the selection of the tab of sub-devices associated, display a list of sub-devices associated with the first electrical device on the display, wherein the first electrical device is configured to be communicatively connected to each of the sub-devices comprised in the list of sub-devices associated with the first electrical device;
receive, via the display, a selection of a first sub-device comprised in the list of sub-devices associated with the first electrical device, and in response to receiving the selection of the first sub-device, display a main image of the first sub-device on the display, wherein the main image of the first sub-device comprises basic information of the first sub-device and an upgrade tab; and
receive, via the display, a selection of the upgrade tab, and send, via the wireless communication unit, a command to the first electrical device to enable the first electrical device to download an upgrade package for the first sub-device to upgrade the first sub-device when the first electrical device is communicatively connected to the first sub-device.

25. The device according to claim 24, wherein the first electrical device is a power tool and the first sub-device is a battery pack for the first electrical device.

26. The device according to claim 24, wherein the first electrical device is a battery pack and the first sub-device is a charger or a power tool for the first electrical device.

27. The device according to claim 24, wherein the first electrical device is a charger and the first sub-device is a battery pack for the first electrical device.

28. The device according to claim 24, wherein the basic information of the first sub-device comprises firmware version information of the first sub-device.

29. The device according to claim 24, wherein the main image of the first electrical device further comprises an icon of the first electrical device.

30. The device according to any one of claims 24 to 29, wherein a communication manner between the first electrical device and the first sub-device comprises Bluetooth communication or data transmission (DT) communication.

31. An external device, comprising a display, a wireless communication unit, and an electronic processor;
wherein the electronic processor is configured to: display a list of power tool devices on a first image of the display, wherein the external device is configured to communicate with each of the power tool devices comprised in the list of power tool devices;
receive, via the display, a selection of a first power tool comprised in the list of power tool devices, and in response to receiving the selection of the first power tool, display a main image of the first power tool on the display, wherein the main image comprises at least an icon of the first power tool; and
in a case where the external device is communicatively connected to the first power tool via the wireless communication unit, cause the icon to dynamically map a state of the first power tool.

32. The device according to claim 31, wherein in the case where the external device is communicatively connected to the first power tool via the wireless communication unit, the icon is dynamic.

33. The device according to claim 31, wherein in a case where the external device is not communicatively connected to the first power tool, the icon is static.

34. The device according to claim 31, wherein in a case where the external device is communicatively connected to the first power tool via the wireless communication unit and the first power tool is a garden tool, the main image further comprises a graphical display of weather at a position of the first power tool.

35. The device according to claim 31, wherein the icon is an overall view of the first power tool.

36. The device according to claim 31, wherein in a case where the external device is communicatively connected to the first power tool via the wireless communication unit and the first power tool is in a working state, a working component of the icon moves cyclically.
